(19) **Europäisches Patentamt**

**European Patent Office**

**Office européen des brevets**

(11) Veröffentlichungsnummer: **0 327 676**

**A2**

(12) **EUROPÄISCHE PATENTANMELDUNG**

(21) Anmeldenummer: **88116489.1**

(22) Anmeldetag: **05.10.88**

(51) Int. Cl.⁴: **F16K 31/04 , F16K 47/00 , F16H 25/20**

(30) Priorität: **10.02.88 DE 3804097**

(43) Veröffentlichungstag der Anmeldung:
**16.08.89 Patentblatt 89/33**

(84) Benannte Vertragsstaaten:
**AT DE FR GB IT NL**

(71) Anmelder: **Siemens Aktiengesellschaft**
**Wittelsbacherplatz 2**
**D-8000 München 2(DE)**

(72) Erfinder: **Ziem, Hans-Joachim, Dipl.-Ing. (FH)**
**Karl-Plesch-Strasse 70**
**D-8501 Schwanstetten(DE)**

(54) **Elektromotorischer Stellantrieb.**

㊗ In dem in einem Tragkörper (1) nur drehbeweglich gelagerten Schneckenrad (10) ist eine Spindelmutter (12) nur translatorisch verstellbar geführt und
an beiden Enden am Schneckenrad durch Federanordnungen (14,15) abgestützt. Eine mit der Spindelmutter (12) gekuppelte Antriebsgewindespindel (3)
ist am Tragkörper (1) nur translatorisch verstellbar
geführt und zwischen ihr und einer nur verschiebbar
gelagerten Stellspindel (6) eines mit dem Tragkörper
(1) verbundenen Stellgliedes (5) ist eine federnd
kraftschlüssig als Stellkrafteinrichtung arbeitende
Pufferanordnung (3A,4,16,17,18) vorgesehen.

FIG 1

EP 0 327 676 A2

## Elektromotorischer Stellantrieb

Die Erfindung betrifft einen elektromotorischen Stellantrieb gemäß dem Oberbegriff des Anspruchs 1.

Ein solcher Stellantrieb ist durch die DE-B1-24 42 622 bekannt. Bei diesem bekannten Antrieb wird über die Antriebsgewindespindel das Zwischenstück je nach Stellrichtung nach oben oder unten bewegt und dadurch beispielsweise ein über die Ventilspindel mit dem Kupplungsstück verbundenes Ventil in seine Öffnungs- oder seine Schließstellung bewegt. Sobald das Ventil seine jeweilige Endlage erreicht, wird das Tellerfederpaket infolge der noch andauernden Bewegung der Antriebsgewindespindel zusammengepreßt und dadurch die entsprechende Anpreßkraft für das Ventil erzeugt. Das Maß der Zusammenpressung des Tellerfederpaketes hängt dabei von der Zeitdauer ab, die vom Erreichen der jeweiligen Endlage des Ventils bis zum Stillstand des Elektromotors nach dem Abschalten durch entsprechende Endschalter vergeht. Während dieser Zeitdauer treibt nämlich der Elektromotor noch die Antriebsgewindespindel an. Die Dauer des Nachlaufes des Elektromotors ist starken Schwankungen unterworfen, die vor allem von der jeweiligen Höhe der den Motor speisenden Netzspannung abhängen. Damit schwankt die am Ventil wirksam werdende Anpreßkraft entsprechend stark.

Der Erfindung liegt die Aufgabe zugrunde, einen Stellantrieb der gattungsgemäßen Art so auszubilden, daß unabhängig von äußeren Einflüssen stets die gleiche Anpreßkraft in der jeweiligen Endlage des Stellgliedes erreicht wird.

Die Lösung der gestellten Aufgabe gelingt nach der Erfindung durch die im Kennzeichen des Anspruches 1 angegebenen Merkmale.

Durch die Begrenzung des Verstellweges der Antriebsgewindespindel ist für das Spannen der Federanordnung nach Erreichen der jeweiligen Endlage des Stellgliedes ein fester Weg vorgegeben, so daß die Federanordnung immer im gleichen Maße gespannt wird.

Bei einer Ausgestaltung des Antriebes gemäß den Merkmalen des Anspruchs 2 wird bei einem in beiden Endlagen wirksamen Stellglied für beide Endlagen stets eine ausreichende Spannung der Federanordnung und damit auch eine ausreichende Anpreßkraft in der jeweiligen Endlage erreicht.

Dadurch, daß die die Antriebsgewindespindel verstellende Spindelmutter in dem Schneckenrad drehmomentübertragend und axial verstellbar geführt und beidseitig über Tellerfederscheiben an dem Schneckenrad abgestützt ist, werden die beim Auftreffen der Antriebsgewindespindel auf den jeweiligen gehäusefesten Anschlag auftretenden und weiterhin gehäusefesten Anschlag auftretenden und auf den Antriebsmotor rückwirkenden Stöße gedämpft. Bei einem derart ausgestalteten Antrieb wird der Motor beim Spannen der das Schneckenrad abstützenden Tellerfederscheiben stark belastet und kann schließlich sogar blockiert werden. Der durch diese Belastung bewirkte starke Stromanstieg kann als Abschaltkriterium für den Motor herangezogen werden. Damit entfallen die sonst notwendigen mechanischen Endschalter.

Eine Ausführungsform des Stellantriebes gemäß den Merkmalen des Anspruchs 5 zeichnet sich durch eine besonders gute Geräuschdämpfung aus.

Anhand eines in der Zeichnung schematisch dargestellten Ausführungsbeispiels eines Stellantriebes wird die Erfindung nachfolgend näher erläutert. Es zeigt:

FIG 1 einen Stellantrieb in Schließendstellung des Stellgliedes,

FIG 2 den gleichen Stellantrieb in Mittelendstellung und

FIG 3 den Stellantrieb in Offenendstellung des Stellgliedes.

Der komplette Stellantrieb mit integrierter Schubstufe für ein Stellglied 5 mit Absperrventil 7 in einer Rohrleitung 8 weist ein geschlossenes zweiteiliges Gehäuse 1 mit einem Oberteil 1A und einem mit diesem verschraubten Unterteil 1B auf, die beide gegeneinander winkelversetzbar abgedichtet verbunden sind, z.B. durch gleichmäßig am Umfang ihrer Verbindungsflansche angeordnete Befestigungsmittel. Der Unterteil 1B ist mit einem Anschlußflansch 1F für den Stellgliedflansch 5A der Stellgliedlaterne 5B eines Stellgliedes 5 versehen. In der Stellgliedlaterne 5B ist gegen Verdrehen gesichert eine Stellspindel 6 axial verschieblich geführt, die das Absperrventil 7 in der Rohrleitung 8 im öffnenden bzw. schließenden Sinn verschiebt bei entsprechender Stellbewegung der Schubstufe des Stellantriebs. Die Schubstufe ist über eine als Stellkrafteinrichtung dienende federnde Pufferanordnung 3A,4,16,17,18 mit der Stellspindel 6 gekuppelt. Die Schubstufe besteht aus einem im Oberteil 1A durch Radiallager 11 axial fixierten drehbaren Schneckenrad 10 mit einer inneren Längsnut 10A für eine Paßfeder 13 zur Verdrehung einer durch zwei endseitige Tellerfederscheiben 14,15 begrenzt axial verschieblich abgestützten Spindelmutter 12, in der eine Antriebsgewindespindel 3 axial beweglich angeordnet und durch eine in eine Innenlängsnut 1G des Unterteils 1B eingreifende Paßfeder 13A am Unterteil 1B des Gehäuses 1 verdrehungssicher geführt ist. Die Stellspindel ist in ein endseitig aus dem Gehäuse 1 ragendes Kupplungsstück 4 der Pufferanordnung eingeschraubt, das seinerseits im Anschlußflansch 1F gegen Austritt des Öls im Gehäuse 1 abgedichtet ist.

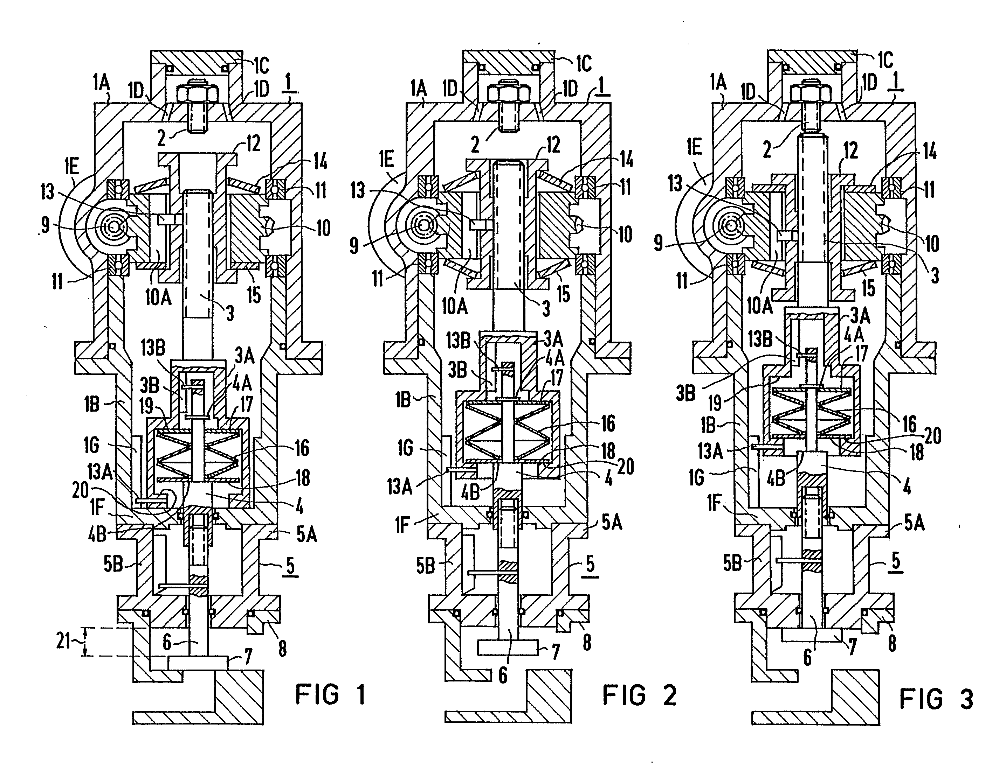

Das stangenförmige Kupplungsstück 4 ragt in eine mit dem einen Ende der Antriebsgewindespindel 3 starr verbundene, als Zwischenstück dienende Antriebslaterne 3A mit Längsnut 3B und ist mit dieser durch eine in die Längsnut 3B eingreifende Paßfeder 13B verdrehungsgesichert längsverschieblich abgefedert gekuppelt, wozu eine Federanordnung 16 zwischen auf das Kupplungsstück 4 aufgesetzten und durch Anschläge 4A und 4B fixierten Anschlagscheiben 17,18 angeordnet ist. Die Anschlagscheiben 17 und 18 sind lageabhängig gegen die Antriebslaterne 3A und/oder das Kupplungsstück 4 abgestützt, je nach Lage der Antriebsgewindespindel 3 entsprechend den drei Grundstellungen nach den FIG 1 bis 3. Abhängig von diesen Stellungen ist auch die Spindelmutter 12 axial unterschiedlich zum Schneckenrad 10 verstellt und stützt sich dabei gegen die eine oder andere oder beide Tellerfederscheiben 14 und 15 ab. In voller Ventilöffnungsstellung (FIG 3) liegt die Antriebsgewindespindel 3 an der Anschlagschraube 2 an, die von einem die Ölfüll- und Entleeröffnungen 1D abschließenden Verschluß 1C abgedeckt ist.

Die den Oberteil 1A abgedichtet durchdringende Schneckenwelle 9 ist mit einem am Anschlußflansch 1E befestigten, nicht dargestellten Elektromotor gekuppelt und kann an ihrem normalerweise abgedeckten anderen Ende mit einem Handrad unter Trennung der Versorgungsleitungen für den Elektromotor verbunden werden.

Soll das Absperrventil 7 in die in FIG 1 gezeigte Schließendstellung gebracht werden, wird der Elektromotor mit der entsprechenden Drehrichtung eingeschaltet. Über die Antriebsgewindespindel 3 wird die Antriebslaterne 3A nach unten geschoben. Die Federanordnung 16 nimmt dabei vor Erreichen dieser Schließendstellung die in FIG 2 gezeigte Stellung ein. In dieser Stellung liegen die Anschlagscheiben 17 und 18 radial innen an den Anschlägen 4A und 4B des Kupplungsstückes 4 an. Radial außen liegen die Anschlagscheiben 17 und 18 dagegen an einem oberen und unteren Begrenzungsrand 19 und 20 der Antriebslaterne 3A an. Der Verstellweg der Antriebsgewindespindel 3, der in Schließrichtung des Absperrventiles 7 durch die als Anschlag dienende Innenwand des Anschlußflansches 1F und in Öffnungsrichtung durch die Anschlagschraube 2 begrenzt wird ist größer gewählt als der Verstellweg 21 des Absperrventiles 7. Damit kann sich die Antriebsgewindespindel 3 nach dem Erreichen der jeweiligen Endstellung des Absperrventiles noch weiter bewegen.

Beim Schließen des Absperrventiles 7 bleibt das Kupplungsstück 4 bei Erreichen der Schließstellung des Absperrventiles 7 stehen. Die Antriebslaterne 3A wird dagegen durch die Antriebsgewindespindel 3 noch weiter nach unten bewegt, bis die Unterkante der Antriebslaterne 3A auf die Innenwand des Anschlußflansches 1F auftrifft. Durch diese Weiterbewegung der Antriebslaterne 3A gegenüber dem stillstehenden Kupplungsstück 4 wird die Federanordnung 16 zwischen dem unteren Anschlag 4b des Kupplungsstückes 4 und dem oberen Begrenzungsrand 19 der Antriebslaterne 3a gespannt und somit der notwendige Anpreßdruck für das Absperrventil 7 erzeugt. Nach dem Auftreffen der Antriebslaterne 3A auf die Innenwand, kommt auch die Antriebsgewindespindel 3 zur Ruhe. Jetzt wird durch den noch laufenden Motor die Spindelmutter 12 gegen die Kraft der Tellerfederscheibe 15 nach oben bewegt, bis der Motor blockiert oder kurz vor dem Blockieren abgeschaltet wird. Die dabei auftretenden hohen Schubkräfte werden von der starr an der Innenwand des Anschlußflansches 1F anliegenden Antriebslaterne 3A aufgenommen und beeinflussen nicht die auf das Absperrventil 7 wirkende Anpreßkraft der Federanordnung 16.

Beim Öffnen des Absperrventiles 7 bleibt das Kupplungsstück 4 in der der Öffnungsstellung des Absperrventils 7 entsprechenden Stellung stehen (FIG 3). Die Antriebslaterne 3A bewegt sich dagegen noch weiter nach oben, bis das Ende der Antriebsgewindespindel 3 auf die Anschlagschraube 2 trifft. Die Federanordnung 16 wird dabei zwischen dem oberen Anschlag 4A des Kupplungsstückes 4 und dem unteren Begrenzungsrand 20 der Antriebslaterne 3a gespannt und damit wiederum ein entsprechender Anpreßdruck auf das Absperrventil 7 in der Öffnungsstellung ausgeübt. Nach dem Auftreffen der Antriebsgewindespindel 3 auf die Anschlagschraube 2 wird die Spindelmutter 12 gegen die Kraft der Tellerfederscheibe 14 nach unten bewegt, bis der Motor zum Stillstand kommt. Auch in dieser Stellrichtung ist die auf das Absperrventil 7 wirkende Anpreßkraft von der auf die An- triebsgewindespindel 3 wirkenden Schubkraft ent- koppelt.

Auf den Stellantrieb von außen einwirkenden Störgrößen haben bei der erfindungsgemäßen Ausbildung des Stellantriebes keinen Einfluß mehr auf die Anpreßkraft des Absperrventiles. Insbesondere führt der durch Schwankungen der Versorgungsspannung bedingte unterschiedlich lange Nachlauf des Elektromotors nicht mehr zu unterschiedlichen Anpreßdrücken. Ferner bleibt der Anpreßdruck auch weitgehend unabhängig von Temperaturänderungen und dem Verschleiß der Dichtungen erhalten.

Da die Federanordnung 16 nur für das Aufbringen der nötigen Anpreßkraft des Absperrventiles 7

3

benutzt wird und keine überschüssige Antriebsenergie aufnehmen muß, kann sie wesentlich kleiner, d.h. schwächer dimensioniert werden als die Tellerfederscheiben 14 und 15.

## Ansprüche

1. Elektromotorischer Stellantrieb mit Schubstufe für ein translatorisch verstellbares Stellglied (5), welcher Antrieb in einem Gehäuse (1) ein Schneckengetriebe (9,10,12) aufweist, dessen Schneckenwelle (9) mit einem Elektromotor gekuppelt und über dessen vom Schneckenrad (10) betätigte Spindelmutter (12) eine verdrehungsgesicherte Antriebsgewindespindel (3) translatorisch verstellbar ist, die mit einem Zwischenstück (3A) verbunden ist, das seinerseits über eine Federanordnung (16) mit einem mit dem Stellglied (5) verbundenen Kupplungsstück (4) elastisch gekuppelt ist, wobei die Federanordnung (16) aus einem zwischen zwei Anschlagscheiben (17,18) angeordneten Tellerfederpaket (16) besteht, welche Anschlagscheiben (17,18) radial innen an in axialem Abstand an dem Kupplungsstück vorgesehenen Anschlägen (4A und 4B) und radial außen an ebenfalls in axialem Abstand an dem Zwischenstück (3A vorgesehenen Anschlägen (19,20) anliegen,
**dadurch gekennzeichnet,**
daß der Verstellweg der Antriebsgewindespindel (3) durch einen gehäusefesten Anschlag in der gewünschten Verstellrichtung begrenzt ist, wobei der durch den gehäusefesten Anschlag vorgegebene Verstellweg der Antriebsgewindespindel (3) größer als der Verstellweg (21) des Stellgliedes (5) in die betreffende Endlage bemessen ist.

2. Stellantrieb nach Anspruch 1,
**dadurch gekennzeichnet,**
daß der Verstellweg der Antriebsgewindespindel (3) durch einen weiteren gehäusefesten Anschlag (2) auch in der anderen Verstellrichtung begrenzt ist, wobei der durch die beiden gehäusefesten Anschläge (1F und 2) vorgegebene Verstellweg der Antriebsgewindespindel (3) größer als der Verstellweg (21) des Stellgliedes (5) zwischen seinen beiden Endlagen bemessen ist.

3. Stellantrieb nach Anspruch 1 oder 2,
**dadurch gekennzeichnet,**
daß die die Antriebsgewindespindel (3) verstellende Spindelmutter (12) in dem Schneckenrad (10) drehmomentübertragend und axial verstellbar geführt und beidseitig über Tellerfederscheiben (14,15) an dem Schneckenrad (10) abgestützt ist.

4. Stellantrieb nach Anspruch 1, 2 oder 3,
**dadurch gekennzeichnet,**
daß als Zwischenstück eine Antriebslaterne (3A) mit der Antriebsgewindespindel (3) verbunden ist, in deren Innenraum das Kupplungsstück (4) in beiden Stellrichtungen unverdrehbar geführt und in dessen durch eine Öffnung aus dem Gehäuse (1) ragender Endzapfen die Stellspindel (6) des Stellgliedes (5) einschraubbar ist.

5. Stellantrieb nach einem oder mehreren der vorhergehenden Ansprüche 1 bis 4,
**dadurch gekennzeichnet,**
daß das Gehäuse (1) als zweiteiliges, geschlossenes, ölgefülltes Gehäuse (1A,1B) für die Schneckenwelle (9), das Schneckenrad (10) und die aus der Spindelmutter (12), der Antriebsgewindespindel (3), der mit dieser verbundenen Antriebslaterne (3A) und dem Kupplungsstück (4) bestehende Schubstufe ausgebildet ist, aus dessen Oberteil (1A) die beiden Enden der Schneckenwelle (9) und aus dessen Unterteil (1B) der Endzapfen des Kupplungsstückes (4) abgedichtet herausgeführt sind.

6. Stellantrieb nach einem oder mehreren der vorhergehenden Ansprüche 1 bis 5,
**dadurch gekennzeichnet,**
daß der eine gehäusefeste Anschlag (2) dem freien Ende der Antriebsgewindespindel (3) gegenüberliegend am Gehäuse (1) angeordnet und axial verstellbar ist.

7. Stellantrieb nach Anspruch 6,
**dadurch gekennzeichnet,**
daß der verstellbare Anschlag aus einer Anschlagschraube (2) besteht, die von einem Verschluß für zu ihr benachbarte Füll-und Entleerungsöffnungen überdeckt ist.

8. Stellantrieb nach einem oder mehreren der vorhergehenden Ansprüche 1 bis 7,
**dadurch gekennzeichnet,**
daß der andere gehäusefeste Anschlag durch die die Öffnung für den Endzapfen des Kupplungsstückes (4) enthaltende Gehäusewand (1F) gebildet ist.

P 3035 E

FIG 1

FIG 2

FIG 3